# EUROPEAN PATENT SPECIFICATION

(11) **EP 2 258 583 B1**
(45) Date of publication and mention of the grant of the patent: **04.04.2018**
(21) Application number: 10181349.1
(22) Date of filing: 10.05.2006
(51) Int. Cl.: B60N 2/28

(54) **Child safety seat assembly with buckle positioning member**
Kindersicherheitssitzaufbau mit einem Schnallpositionierelement
Ensemble de siège de sécurité pour enfants avec un dispositif de positionnement de boucle

(30) Priority: 05.09.2005 CN 200512118621
(43) Date of publication of application: 08.12.2010
(62) Divisional of application: 06252462.4
(73) Proprietor: Wonderland Nurserygoods Co., Ltd., Taipei (TW)
(72) Inventor: Chen, Shun-Min, Taipei (TW); Hartenstine, Curtis M, Birdsboro, PA (US)
(74) Representative: Mathys & Squire LLP

(56) References cited:
- AU-A1- 2003 266 477
- GB-A- 1 173 891
- JP-A- 2002 079 909
- US-A- 4 588 224
- US-A- 5 468 020
- US-A- 5 678 887

## Description

The invention relates to a child safety seat assembly, more particularly to a child safety seat assembly with a buckle positioning member.

Car safety belt devices are generally designed based on an average size of adults. As a result, when used on a child, the safety belt device is unable to make the child sit firmly on the seat when the car rocks or vibrates. Moreover, when the car is suddenly braked, the safety belt device may strangle the child.

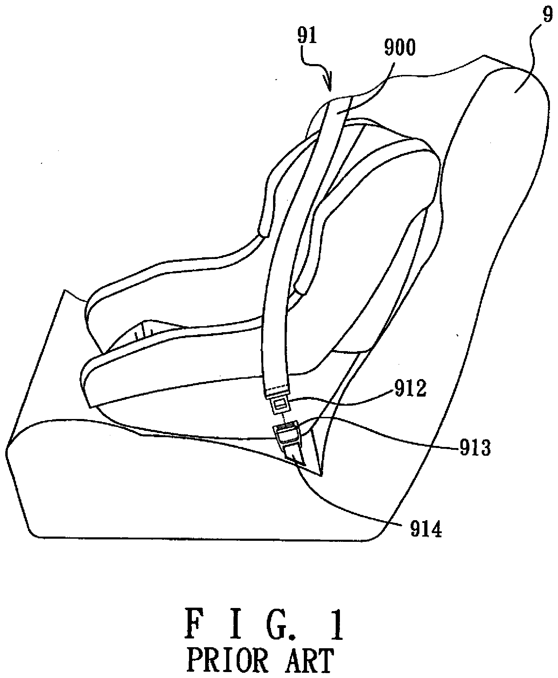

As shown in Figure 1, a conventional child safety seat is mounted removably on a rear seat 9 of a car. A safety belt device 91 is coupled to the rear seat 9 for safety purposes, and includes a safety belt 900 secured to one side of the car seat 9, a catch 912 connected to a free end of the safety belt 900, a connecting belt 914 secured to another side of the car seat 9, and a buckle 913 connected to a free end of the connecting belt 914 and engageable with the catch 912. In use, the safety belt 900 crosses a front side of the child safety seat for firmly holding the child safety seat on the car seat 9.

Since the connecting belt 914 together with the buckle 913 is movably disposed on the car seat 9, operation of the catch 912 for engaging the buckle 913 cannot be conducted instantly and conveniently, particularly when it is dark inside the car. In addition, it is not easy for a child seating on the child safety seat to gain access to the buckle 913.

Document GB1173891 discloses a child safety seat assembly according to the preamble of claim 1. Therefore, the object of the present invention is to provide a child safety seat assembly that can overcome the aforesaid drawbacks associated with the prior art.

According to this invention, there is provided a child safety seat assembly as defined in claim 1. Other features and advantages of the present invention will become apparent in the following detailed description of the preferred embodiments with reference to the accompanying drawings, of which:
Figure 1 is a perspective view of a conventional child safety seat mounted on a car seat;
Figure 2 is a fragmentary perspective view of the first preferred embodiment of a child safety seat assembly according to the present invention, illustrating how the child safety seat assembly is used with a safety belt device provided on a car seat;
Figure 3 is a fragmentary perspective view of the second preferred embodiment of a child safety seat assembly according to the present invention;
Figure 4 is a fragmentary perspective view of the third preferred embodiment of a child safety seat assembly according to the present invention;
Figure 5 is a fragmentary perspective view of an example of a child safety seat assembly according to the present invention;
Figure 6 is a fragmentary perspective view of the fifth preferred embodiment of a child safety seat assembly not covered by the present invention;
Figures 7 and 8 are fragmentary perspective views of an example not covered by the present invention.

Before the present invention is described in greater detail with reference to the accompanying preferred embodiments, it should be noted herein that like elements are denoted by the same reference numerals throughout the disclosure.

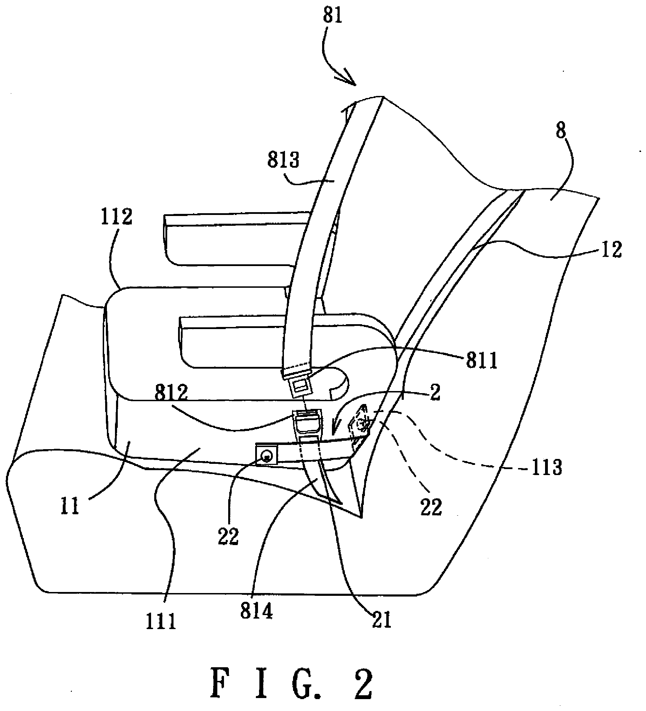

Referring to Figure 2, the first preferred embodiment of a child safety seat assembly according to the present invent ion is shown to be adapted to be mounted on a vehicle seat 8 with a safety belt unit 81 that includes a first belt 813 having a free end that is provided with a catch 811, and a second belt 814 having a free end that is provided with a buckle 812 for engaging the catch 811. The child safety seat assembly includes: a seat body 11 having two opposite lateral sides 111, 112 and a rear side 113 interconnecting the lateral sides 111, 112; and a buckle-positioning member 2 that is provided on the seat body 11 and that is operable to hold or to position the buckle 812 at one of the lateral sides, such as the lateral side 111, of the seat body 11, and to restrain the second belt 814 along the lateral side 111 of the seat body 11. The arrangement of the buckle-positioning member 2 can facilitate operation of engaging the catch 811 with the buckle 812.

The buckle-positioning member 2 includes a fastening belt 21 that has one end portion secured to the rear side 113 of the seat body 11, and the other end portion secured to the lateral side 111 so as to cooperate with the lateral side 111 of the seat body 11 to define a gap. The buckle 812 and a portion of the second belt 814 that is connected to the buckle 812 can be extended through the gap, thereby holding the buckle 812 at the lateral side 111 of the seat body 11 through the fastening belt 21. In this embodiment, the fastening belt 21 is elastic.

The buckle-positioning member 2 further includes fastening screws 22 for fastening two end portions of the fastening belt 21 to the lateral side 111 and the rear side 113 of the seat body 11.

Alternatively, the two end portions of the fastening belt 21 may be fastened to either one of the two lateral sides 111, 112 of the sea body 11 or fastened respectively to the lateral side 112 and the rear side 113. Moreover, to enhance user convenience, two buckle-positioning members 2 can be mounted respectively on the lateral sides 111, 112 of the seat body 11.

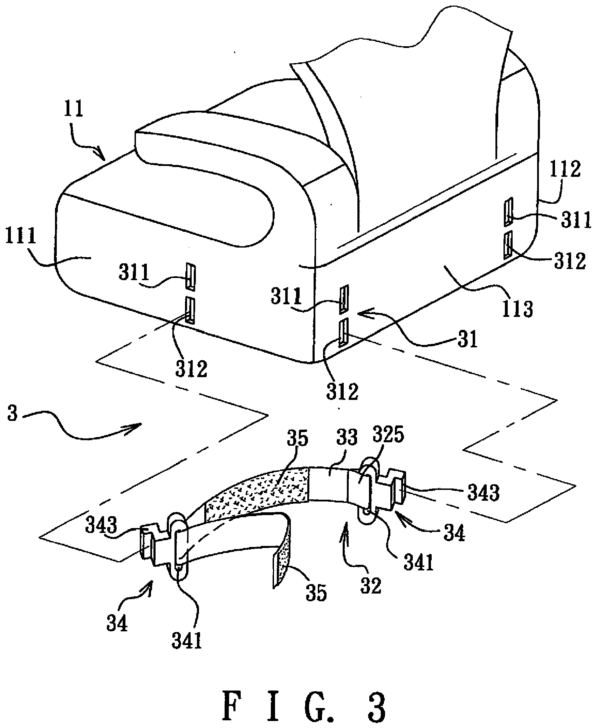

Referring to Figure 3, the second preferred embodiment of this invention has a structure similar to that of the first preferred embodiment, except that each of the rear side 113 and said one of the lateral sides 111, 112 of the seat body 11 is formed with a retaining hole unit 31 that has at least one retaining hole (in this embodiment, there are two retaining holes 311, 312). The buckle-positioning member 3 further includes a pair of connecting parts 34 connected respectively to the end portions of the fastening belt 32. Each of the connecting parts 34 has a frame body 341, and is formed with an insert 343 extending therefrom and fitted removably into a selected one of the retaining holes 311, 312 in the rear side 113 and one of the lateral sides 111, 112 of the seat body 11_{.} According to the invention the fastening belt 32 further has a middle section 33 extending between the end portions of the fastening belt 32, and hook-and-loop fastening means 35 provided on the middle section 33 of the fastening belt 32 and the end portion of the fastening belt 32. One of the end portions of the fastening belt 32, which is to be secured to the rear side 113, is formed with a first loop 325 around a frame portion of the frame body 341 of the respective one of the connecting parts 34. The other of the end portions of the fastening belt 32 extends through the frame body 341 of the respective one of the connecting parts 34, and is attached to the middle section 33 of the fastening belt 32 through the hook-and-loop fastening means 35 so as to form a second loop around a frame portion of the frame body 341 of the respective one of the connecting parts 34 and so as to permit distance adjustment between the connecting parts 34 by virtue of the hook-and-loop fastening means 35. In this embodiment, the hook-and-loop fastening means 35 includes a Velcro ^{(RTM)} hook-and-loop fastener. The buckle-positioning member 3 can be detached from the seat body 11 by disengaging the inserts 343 of the connecting parts 34 from the respective retaining holes 311, 312, thereby permitting movement of the buckle-positioning member 3 together with the seat body 11 when the position of the seat body 11 is to be changed from one side of a car seat (not shown) to an opposite side of the car seat. Moreover, the buckle-positioning member 3 can be adjusted in height by inserting the inserts 343 into upper or lower ones of the retaining holes 31, 312.

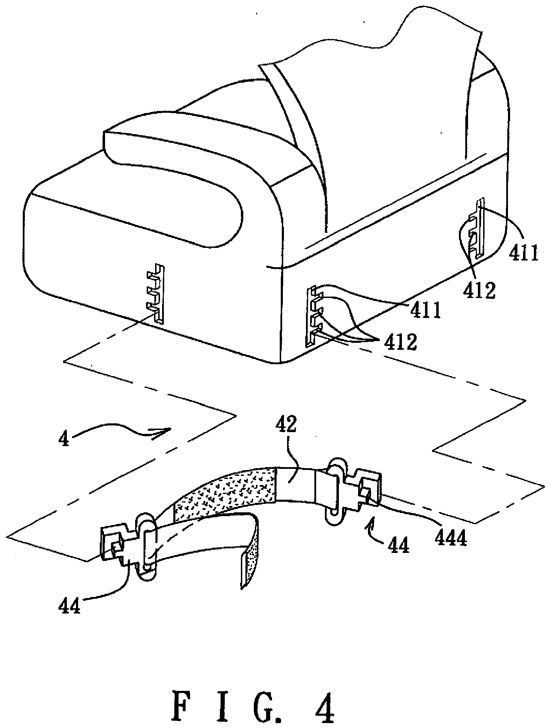

Referring to Figure 4, the third preferred embodiment of this invention is shown to be similar to the second preferred embodiment, the main differences residing in that: each of the rear side 113 and said one of the lateral sides 111, 112 of the seat body 11 is further formed with a plurality of retaining grooves 412 that are aligned in series and that are transverse to and that are in spatial communication with the retaining hole 411, and that each of the connecting parts 44 is further formed with a tongue 444 protruding therefrom and engageble with a selected one of the retaining grooves 412 in the respective one of the rear side 113 and the lateral side 111 of the seat body 11 so as to permit height adjustment of the fastening belt 42 relative to the seat body 11 relative to said seat body 11.

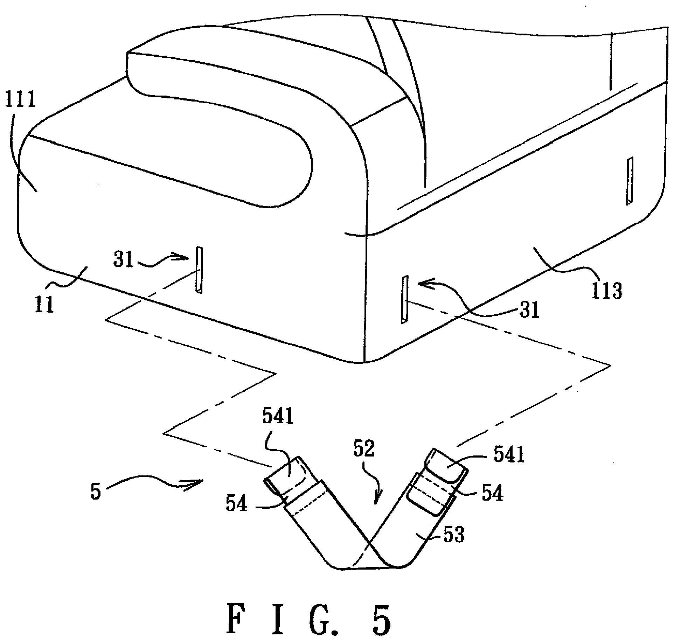

Referring to Figure 5, an example not covered by the present invention is shown to be similar to the second preferred embodiment, the main difference residing in that: the insert 541 of each of the connecting parts 54 of the fastening belt 52 has a hooking end that is engagable with the retaining hole 31 in the respective one of the rear side 113 and the lateral side 111 of the seat body 11. The fastening belt 52 is elastic.

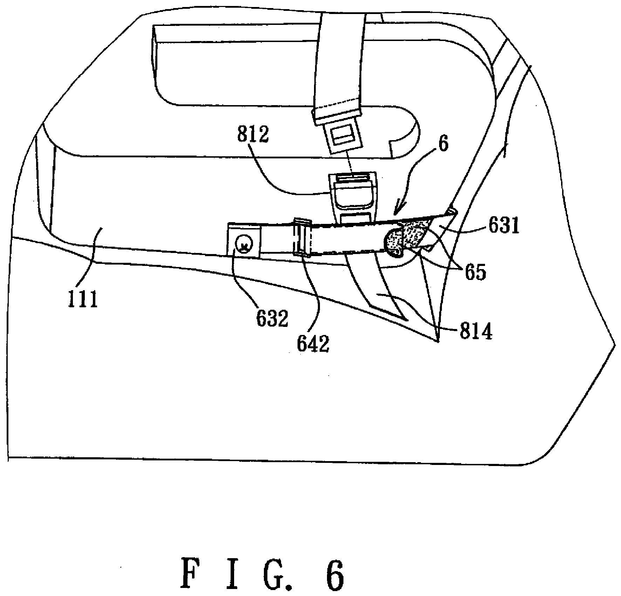

Referring to Figure 6, the fifth preferred embodiment of this invention is shown to differ from the first preferred embodiment in that the buckle-positioning member 6 includes a non-elastic fastening belt 631, a connecting belt 632, a frame body 642, and hook-and-loop fastening means 65. The fastening belt 631 has a first end portion secured to the rear side 113 of the seat body 11, and a second end portion extending through the frame body 642. The connecting belt 632 has a first end portion secured to one of the lateral sides, such as the lateral side 111 of the seat body 11, and a second end portion connected to the frame body 642. The hook-and-loop fastening means 65 are provided on the first and second end portions of the fastening belt 631 so as to permit engagement between the first and second end portions of the fastening belt 631 and so as to permit distance adjustment between the first and second end portions of the fastening belt 631. The fastening belt 631 and the connecting belt 632 cooperate with the lateral side 111 of the seat body 11 to define a gap. The buckle 812 and the portion of the second belt 814 that is connected to the buckle 812 can be extended through the gap, thereby holding the buckle 812 at the lateral side 111.

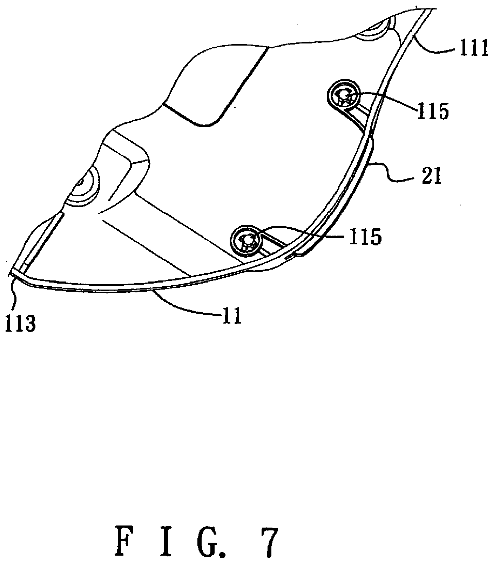

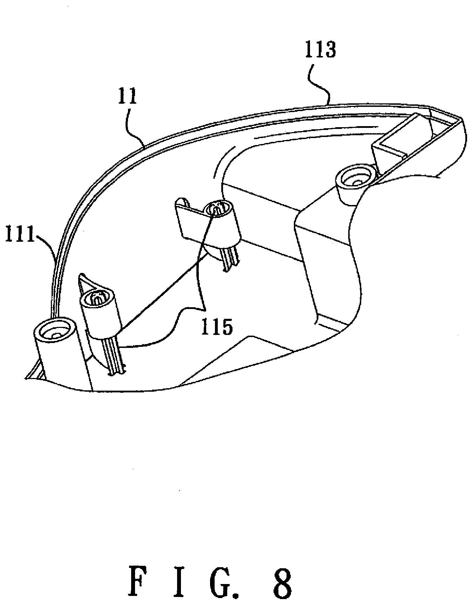

Figs. 7 and 8 illustrate an example of the child safety seat assembly not covered by the present invention. The child safety seat assembly of this embodiment differs from the first embodiment in that the fastening belt 21 is in the form of an elastic band which has two end portions extending into the seat body 11 and sleeved on a pair of spaced apart rods 115 mounted in the seat body 11, and a middle portion extending between the end portions and disposed outwardly of the seat body 11. In this embodiment, the fastening belt 21 is disposed at a corner between the lateral side 111 and the rear side 113.

With the inclusion of the buckle-positioning member 2 in the child safety seat assembly of this invention, the aforesaid drawbacks associated with the prior art can be eliminated.

Each feature disclosed in this specification (which term includes the claims) and/or shown in the drawings may be incorporated in the invention independently of other disclosed and/or illustrated features, if remaining within the scope of the protection as defined in claims 1 to 5. Reference numerals appearing in the claims are illustrative only and the claims shall be interpreted as if they are not present.

The description of the invention with reference to the drawings is by way of example only.

The text of the abstract filed herewith is repeated here as part of the specification.

A child safety seat assembly for mounting on a vehicle seat 8 includes; a seat body 11 having two opposite lateral sides 111, 112; and a buckle-positioning member 2, 3, 4, 5, 6 that is provided on the seat body 11 and that is operable to hold a buckle 812 provided on the vehicle seat 8 at one of the lateral sides 111 of the seat body 11.

### THE DISCLOSURE OF THE APPLICATION ALSO INCLUDES THE FOLLOWING NUMBERED CLAUSES

1. A child safety seat assembly adapted to be mounted on a vehicle seat (8) with a safety belt unit (81) that includes a first belt (813) provided with a catch (811), and a second belt (814) provided with a buckle (812) for engaging the catch (811), said child safety seat assembly comprising:
   a seat body (11) having two opposite lateral sides (111, 112); and
   a buckle-positioning member (2, 3, 4, 5, 6) that is provided on said seat body (11) and that is operable to hold the buckle (812) at one of said lateral sides (111) of said seat body (11).
2. The child safety seat assembly as claimed in Clause 1, wherein said seat body (11) has a rear side (113) interconnecting said lateral sides (111, 112), said buckle-positioning member (2, 3, 4, 5, 6) including a fastening belt (21) that has one end portion connected to said rear side (113) of said seat body (11), and the other end portion connected to said one of said lateral sides (111) so as to cooperate with said one of said lateral sides (111) of said seat body (11) to define a gap for extension of the buckle (812) therethrough.
3. The child safety seat assembly as claimed in Clause 2, wherein said buckle-positioning member (2) further includes fastening screws (22) for fastening said end portions of said fastening belt (21) to said one of said lateral sides (111) and said rear side (113) of said seat body (11).
4. The child safety seat assembly as claimed in Clause 2, wherein each of said rear side (113) and said one of said lateral sides (111) of said seat body (11) is formed with at least one retaining hole (311, 312), said buckle-positioning member (3) further including a pair of connecting parts (34) connected respectively and removably to said end portions of said fastening belt (32), each of said connecting parts (34) being formed with an insert (343) extending therefrom and fitted removably into said retaining hole (311, 312) in said rear side (113) and said one of said lateral sides (111) of said seat body (11).
5. The child safety seat assembly as claimed in Clause 2, wherein each of said rear side (113) and said one of said lateral sides (111) of said seat body (11) is formed with a plurality of retaining holes (311, 312), said buckle-positioning member (3) further including a pair of connecting parts (34) connected respectively and removably to said end portions of said fastening belt (32), eachof said connecting parts (34) being formed with an insert (343) extending therefrom and fitted removably into a selected one of said retaining holes (311, 312) in said rear side (113) and said one of said lateral sides (111) of said seat body (11) so as to permit position adjustment of said fastening belt (32) relative to said seat body (11).
6. The child safety seat assembly as claimed in Clause 4, wherein each of said connecting parts (34) has a frame body (341), said fastening belt (32) further having a middle section (33) extending between said end portions of said fasteningbelt (32), and hook-and-loop fastening means (35) provided on said middle section (33) of said fastening belt (32) and the other of said end portions of saidfasteningbelt (32), said one of saidendportions of said fastening belt (32) being formed with a first loop (325) around a frame portion of said frame body (341) of the respective one of said connecting parts (34), the other of said end portions of said fastening belt (32) extending through said frame body (341) of the respective one of said connecting parts (34) and being attached to said middle section (33) of said fastening belt (32) through said hook-and-loop fastening means (35) so as to form a second loop around a frame portion of said frame body (341) of the respective one of said connecting parts (34) and so as to permit distance adjustment between said connecting parts (34) by virtue of said hook-and-loop fastening means (35).
7. The child safety seat assembly as claimed in Clause 4, wherein each of said rear side (113) and said one of said lateral sides (111) of said seat body (11) is further formed with a plurality of retaining grooves (412) that are aligned in series and that are transverse to and that are in spatial communication with said retaining hole (411), each of said connecting parts (44) being further formed with a tongue (444) protruding therefrom and engageble with a selected one of said retaining grooves (412) in the respective one of said rear side (113) and said one of said lateral sides (111) of said seat body (11) so as to permit height adjustment of said fastening belt (42) relative to said seat body (11).
8. The child safety seat assembly as claimed in Clause 4, wherein said insert (541) of each of said connecting parts (54) has a hooking end that is engagable with said retaining hole (31) in the respective one of said rear side (113) and said one of said lateral sides (111) of said seat body (11).
9. The child safety seat assembly as claimed in Clause 2, wherein said fastening belt (52) is elastic.
10. The child safety seat assembly as claimed in Clause 1, wherein said seat body (11) has a rear side (113) interconnecting said lateral sides (111, 112), said buckle-positioning member (6) including a fastening belt (631), a connecting belt (632), a frame body (642), and hook-and-loop fastening means (65), said fastening belt (631) having a first end portion secured to said rear side (113) of said seat body (11), and a second end portion connected to said frame body (642), said connecting belt (632) having a first end portion secured to said one of said lateral sides (111) of said seat body (11), and a second end portion connected to said frame body (642), said hook-and-loop fastening means (65) being provided on said first and second end portions of said fastening belt (631) so as to permit engagement between said first and second end portions of said fastening belt (631), said fastening belt (631) and said connecting belt (632) cooperating with said one of said lateral sides (111) of said seat body (11) to define a gap for extension of the buckle (812) therethrough.
11. The child safety seat assembly as claimed in Clause 2, wherein said fastening belt (631) has first and second end portions which are provided with hook-and-loop fastening means (65) so as to permit engagement between said first and second end portions of said fastening belt (631) and so as topermit distance adjustment between said first and second end portions of said fastening belt (631).
12. The child safety seat assembly as claimed in Clause 1, wherein said buckle positioning member (2) includes an elastic band (21), and a pair of spaced apart rods (115) mounted in said seat body (11), said elastic band (21) having two end portions extending into said seat body (11) and sleeved on said rods (115).
13. A child safety seat assembly adapted to be mounted on a vehicle seat (8) with a safety belt unit (81) that includes a first belt (813) provided with a catch (811), and a second belt (814) provided with a buckle (812) for engaging the catch (811), said child safety seat assembly comprising:
   a seat body (11) having a lateral side (111); and
   a buckle-positioning member (2, 3, 4, 5, 6)that is provided on said seat body (11) and that is adapted to restrain releasably the second belt (814) along said lateral side (111) of said seat body (11).
14. A child safety seat assembly for mounting on a vehicle seat (8) having a passenger restraining device that includes a buckle (812) and a catch (811) engageable with said buckle (812), said child safety seat assembly comprising:
   a seat body (11) having a lateral side (111) adapted to be disposed adjacent to the buckle (812); and
   a buckle positioning member (2, 3, 4, 5, 6) supported on said seat body (11) and adapted to engage the buckle (812) in such a manner to restrain the buckle (812) along said lateral side (111), thereby facilitating operation of engaging the catch (811) with the buckle (812).

## Claims

1. A child safety seat assembly adapted to be mounted on a vehicle seat (8) with a safety unit (81) that includes a first belt (813) provided with a catch (811), and a second belt (814) provided with a buckle (812) for engaging the catch (811) after the first belt (813) has been extended across said child safety seat assembly, said child safety seat assembly comprising:
a seat body (11) having a lateral side (111, 112) and a rear side (113);
a buckle-positioning member (3) that is disposed on said seat body (11) and that is operable to restrain the buckle (812) at said lateral side (111) of said seat body (11) to facilitate engagement between the buckle (812) and the catch (811) after the first belt (813) has been extended across the seat body (11); **characterized in that**:
said buckle-positioning member (3) includes a fastening belt (32) connected at one side to said lateral side (111) of said seat body (11) and at the other side to said rear side of said seat body (11) and having an end portion, a middle section (33) extending from said end portion, and hook-and-loop means (35) provided on said end portion and said middle section (33) for attachment of said end portion to said middle section (33) for fastening the buckle (812) to said lateral side (111, 112) of said seat body (11),
wherein said lateral side (111, 112) of said seat body (11) is formed with a retaining unit, said buckle-positioning member (3) further including a connecting part (34, 44) that is removably connected with the retaining unit, and
wherein said retaining unit has at least one retaining hole (313, 312), said connecting part (34) being formed with an insert (343) fitted removably into said retaining hole (313).

2. The child safety seat assembly as claimed in claim 1, wherein said retaining unit has a plurality of retaining holes (311, 312), said connecting part (34, 44) being fitted removably into a selected one of said retaining holes (313).

3. The child safety seat assembly as claimed in claim 1, wherein said retaining unit has a plurality of retaining grooves (412) that are aligned in series and that are transverse to and are in spatial communication with said retaining hole (411), the insert of said connecting part (44) having a tongue (444) protruding therefrom and engageable with a selected one of said retaining grooves (412).

4. The child safety seat assembly as claimed in any one of Claims 1 to 3, wherein said seat body (11) has two opposite lateral sides (111, 112), and said buckle-positioning member (3) is operable to restrain the buckle (812) at one of said lateral sides (111, 112) of said seat body (11).

5. The child safety seat assembly as claimed in any one of Claims 1 to 3, wherein the connecting part (34) is connected to said seat body (11) and has a frame body (341), said end portion of said fastening belt (32) extending through said frame body (341) to form a loop (325) around a portion of said frame body (341).

## Patentansprüche

1. Kindersicherheitssitzanordnung, die dafür ausgelegt ist, an einem Fahrzeugsitz (8) mit einer Sicherheitseinheit (81) montiert zu werden, die Folgendes umfasst: einen ersten Gurt (813), der mit einem Gurtschloss (811) versehen ist, und einen zweiten Gurt (814), der mit einer Schlosszunge (812) versehen ist, um mit dem Gurtschloss (811) in Eingriff zu treten, nachdem der erste Gurt (813) über die genannte Kindersicherheitssitzanordnung erstreckt wurde, wobei der genannte Kindersicherheitssitz Folgendes umfasst:
einen Sitzkörper (11) mit einer lateralen Seite (111, 112) und einer hinteren Seite (113);
ein Schlosszungenpositionierungselement (3), das an dem genannten Sitzkörper (11) angeordnet ist und das die Schlosszunge (812) an der genannten laterale Seite (111) des genannten Sitzkörpers (11) zurückhalten kann, um den Eingriff zwischen der Schlosszunge (812) und dem Gurtschloss (811) zu erleichtern, nachdem der erste Gurt (813) über den Sitzkörper (11) erstreckt wurde; **dadurch gekennzeichnet, dass**:
wobei das genannte Schlosszungenpositionierungselement (3) einen Befestigungsgurt (32) umfasst, der auf einer Seite mit der genannten lateralen Seite (111) des genannten Sitzkörpers (11) und auf der anderen Seite mit der genannten Rückseite des genannten Sitzkörpers (11) verbunden ist, und Folgendes aufweist: einen Endabschnitt, einen Mittelabschnitt (33), der sich von dem genannten Endabschnitt erstreckt, und ein Haken- und Ösenmittel (35), das an dem genannten Endabschnitt und dem genannten Mittelabschnitt (33) zur Befestigung des genannten Endabschnitts an dem genannten Mittelabschnitt (33) vorgesehen ist, um die Schlosszunge (812) an der genannten lateralen Seite (111, 112) des genannten Sitzkörpers (11) zu befestigen,
wobei die genannte laterale Seite (111, 112) des genannten Sitzkörpers (11) mit einer Halteeinheit gebildet ist, wobei das genannte Schlosszungenpositionierelement (3) ferner einen Verbindungsteil (34, 44) aufweist, der lösbar mit der Halteeinheit verbunden ist, und
wobei die genannte Halteeinheit mindestens ein Halteloch (313, 312) aufweist, wobei der genannte Verbindungsteil (34) mit einem Einsatz (343) gebildet ist, der entfernbar in das genannte Halteloch (313) eingesetzt ist.

2. Kindersicherheitssitzanordnung nach Anspruch 1, wobei die genannte Halteeinheit eine Vielzahl von Haltelöchern (311, 312) aufweist, wobei der genannte Verbindungsteil (34, 44) abnehmbar in ein ausgewähltes der genannten Haltelöcher (313) eingepasst ist.

3. Kindersicherheitssitzanordnung nach Anspruch 1, wobei die genannte Halteeinheit eine Vielzahl von in Reihe ausgerichteten Haltenuten (412) aufweist, die quer zu dem genannten Halteloch (411) stehen und mit diesem in räumlicher Verbindung stehen, wobei der Einsatz des genannten Verbindungsteils (44) eine Zunge (444) aufweist, die von dieser vorsteht und mit einer ausgewählten der genannten Haltenuten (412) in Eingriff gebracht werden kann.

4. Kindersicherheitssitzanordnung nach einem der Ansprüche 1 bis 3, wobei der genannte Sitzkörper (11) zwei gegenüberliegende Seiten (111, 112) aufweist und das genannte Schlosszungenpositionierelement (3) die Schlosszunge (812) an einer der genannten lateralen Seiten (111, 112) des genannten Sitzkörpers (11) zurückhalten kann.

5. Kindersicherheitssitzanordnung nach einem der Ansprüche 1 bis 3, wobei das Verbindungsteil (34) mit dem genannten Sitzkörper (11) verbunden ist und einen Rahmenkörper (341) aufweist, wobei sich der genannte Endabschnitt des genannten Befestigungsgurts (32) durch den genannten Rahmenkörper (341) erstreckt, um eine Schleife (325) um einen Abschnitt des genannten Rahmenkörpers (341) zu bilden.

## Revendications

1. Ensemble siège de sécurité pour enfants conçu pour être monté sur un siège de véhicule (8) avec une unité de sangles de sécurité (81) qui inclut une première sangle (813) munie d'un fermoir (811), et une deuxième sangle (814) munie d'une boucle (812) pour s'enclencher avec le fermoir (811) après que la première sangle (813) a été étendue à travers ledit ensemble siège de sécurité pour enfants, ledit ensemble siège de sécurité pour enfants comprenant :
un corps de siège (11) possédant un côté latéral (111, 112) et un côté arrière (113) ;
un élément de positionnement de boucle (3) qui est disposé sur ledit corps de siège (11) et qui est apte à fonctionner de façon à restreindre la boucle (812) au niveau dudit côté latéral (111) dudit corps de siège (11) afin de faciliter l'enclenchement entre la boucle (812) et le fermoir (811) après que la première sangle (813) a été étendue à travers le corps de siège (11) ; **caractérisé en ce que** :
ledit élément de positionnement de boucle (3) inclut une sangle de serrage (32) raccordée au niveau d'un côté audit côté latéral (111) dudit corps de siège (11), et au niveau de l'autre côté audit côté arrière dudit corps de siège (11) et possédant une portion d'extrémité, une section centrale (33) s'étendant à partir de ladite portion d'extrémité, et un moyen à crochets et boucles (35) prévu sur ladite portion d'extrémité et ladite portion centrale (33) pour permettre d'attacher ladite portion d'extrémité à ladite section centrale (33) pour serrer la boucle (812) audit côté latéral (111, 112) dudit corps de siège (11),
cas dans lequel ledit côté latéral (111, 112) dudit corps de siège (11) est formé avec une unité de retenue, ledit élément de positionnement de boucle (3) incluant en outre une partie de raccordement (34, 44) qui est raccordée de manière amovible à l'unité de retenue, et
cas dans lequel ladite unité de retenue possède au moins un trou de retenue (313, 312), ladite partie de raccordement (34) étant formée avec une pièce rapportée (343) laquelle est installée de manière amovible dans ledit trou de retenue (313).

2. Ensemble siège de sécurité pour enfants tel que revendiqué dans la revendication 1, ladite unité de retenue possédant une pluralité de trous de retenue (311, 312), ladite partie de raccordement (34, 44) étant installée de manière amovible dans un trou sélectionné desdits trous de retenue (313).

3. Ensemble siège de sécurité pour enfants tel que revendiqué dans la revendication 1, ladite unité de retenue possédant une pluralité de rainures de retenue (412) qui sont alignées en série et qui transversales par rapport à, et en communication spatiale avec, ledit trou de retenue (411), la pièce rapportée de ladite partie de raccordement (44) possédant une languette (444) laquelle est en saillie à partir de celle-ci et apte à s'enclencher avec une rainure sélectionnée parmi lesdites rainures de retenue (412).

4. Ensemble siège de sécurité pour enfants tel que revendiqué dans l'une quelconque des revendications 1 à 3, ledit corps de siège (11) possédant deux côtés latéraux opposés (111, 112), et ledit élément de positionnement de boucle (3) étant apte à fonctionner de façon à restreindre la boucle (812) au niveau d'un desdits côtés latéraux (111, 112) dudit corps de siège (11).

5. Ensemble siège de sécurité pour enfants tel que revendiqué dans l'une quelconque des revendications 1 à 3, la partie de raccordement (34) étant raccordée audit corps de siège (11) et possédant un corps de cadre (341),
ladite portion d'extrémité de ladite sangle de serrage (32) s'étendant à travers ledit corps de cadre (341) afin de former une boucle (325) autour d'une portion dudit corps de cadre (341).
